# EUROPEAN PATENT APPLICATION

(11) **EP 1 920 989 A2**
(43) Date of publication of application: **14.05.2008**
(21) Application number: 07021575.1
(22) Date of filing: 06.11.2007
(51) Int. Cl.: B62D 1/189

(54) **Tilt-type steering apparatus**

(30) Priority: 07.11.2006 JP 2006301135
(71) Applicant: NSK Ltd., Tokyo 141-8560 (JP)
(72) Inventor: Shimoda, Mitsuo, Maebashi-shi Gunma (JP)
(74) Representative: Grünecker, Kinkeldey, Stockmair & Schwanhäusser Anwaltssozietät

(57) **Abstract**

A tilt-type steering apparatus includes a steering column (3), a swivel support bracket (24) which swivelably supports the steering column (3), and a fixing bracket (7a) which supports an intermediate portion of the steering column (3). A heightwise position of the intermediate portion is adjustable. The swivel support bracket (24) includes a coupling plate portion (25) formed with an opening at a center thereof, a support plate portion (26) extending forwardly, and a bent portion (29) which continuously connects an upper end of the coupling plate portion (25) and the support plate portion (26). The coupling plate portion (25) includes a low-rigidity portion (34) at an intermediate portion in a vertical direction thereof. Bending rigidity of the low-rigidity portion (34) is lower than that of the other portion of the coupling plate portion (25) with respect to a force attempting to relatively displace an upper portion and a lower portion of the coupling plate portion (25) in a front-and-rear direction.

## Description

### CROSS-REFERENCE TO RELATED APPLICATION

The present application claims priority from Japanese Patent Application No. 2006-301135 filed on November 7, 2006, the entire content of which is incorporated herein by reference.

### TECHNICAL FIELD

The present invention relates to a tilt-type steering apparatus which can adjust a position of a steering wheel of a vehicle in a heightwise direction.

### BACKGROUND ART

A tilt-type steering apparatus is one of height adjusting apparatuses for a steering wheel, and is operable to adjust a height of the steering wheel in accordance with a physique and a driving posture of a driver.

Conventionally, various types of structures are employed for the tilt-type steering apparatus (see, e.g., JP 10-007003 A and JP 1-173072 U). Figs. 7 and 8 illustrate a structure disclosed in JP 10-007003 A. As shown in Figs. 7 and 8, a steering wheel 1 is fixed to a rear end portion (an upper end portion) of a steering shaft 2. The steering shaft 2 is inserted through a steering column 3, and rotates in accordance with an operation of the steering wheel 1. A front end portion (a lower end portion) of the steering column 3 is supported on a vehicle body so as to be swivelable around a lateral shaft 4. The lateral shaft 4 is disposed between a lower fixing bracket 5, which is fixed on a side of the vehicle body, and a swivel bracket 6, which is fixed to the front end portion of the steering column 3. An intermediate portion of the steering column 3 is supported by an upper fixing bracket 7 such that its vertical position can be adjusted. The upper fixing bracket 7 is fixed to the vehicle body, e.g., on a lower side of a dashboard.

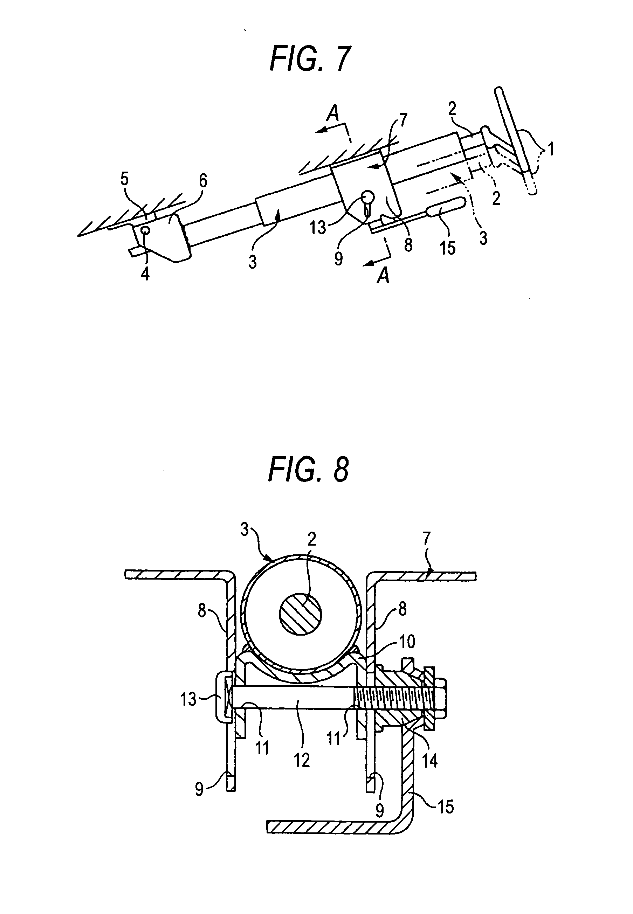

In order to adjust a vertical position of the steering wheel 1, the upper fixing bracket 7 includes a pair of vertical plate portions 8 which are parallel to each other, and vertically elongated slots 9 are formed in the respective vertical plate portions 8. More specifically, each of the slots 9 is formed in an arc shape having its center at a position of the lateral shaft 4, and is formed at respective positions on the vertical plate portions 8 such that the slots 9 align with each other. A lift bracket 10 is fixed to a lower surface of the intermediate portion of the steering column 3 , e.g., by welding. The lift bracket 10 is formed by bending a metal plate having a required rigidity, The lift bracket 10 is fixed to the steering column 3 between the pair of vertical plate portions 8. Through holes 11 are formed in the lift bracket 10 so as to be concentric with each other in a lateral direction (a right-and-left direction in Fig. 8). A tilt bolt 12, which is a rod-shaped member, is inserted through the through holes 11 and the slots 9. The tilt bolt has a head portion 13 (a pressing portion) at one end portion thereof (a left end portion in Fig. 8). The other end portion of the tilt bolt 12 ,which projects outwardly from an outer surface of the upper fixing bracket 7, is screwed onto a tilt nut 14 (a pressing member). A base end portion of a tilt lever 15 is fixedly connected to the tilt nut 14.

When adjusting the heightwise position of the steering wheel 1 in the above described tilt-type steering apparatus, first, the tilt nut 14 is loosened by operating the tilt lever 15 so that a space between the tilt nut 14 and the head portion 13 is increased. Then, the tilt bolt 12 is moved along the slots 9 of the upper fixing bracket 7 to lift or to lower the rear end portion of the steering column 3 is lifted or lowered, thereby moving the steering wheel 1 to a desired heightwise position. The tilt nut 14 is then tightened by the tilt lever 15 so that the space between the head portion 13 and the tilt nut 14 is narrowed, whereby the upper portion of the steering column 3 can be fixed at the adjusted position.

As described above, the structure disclosed in JP 10-007003 A includes the lower fixing bracket 5 and the swivel bracket 6 which are connected to each other via the lateral shaft 4, thereby allowing the front end portion of the steering column 3 to swivel with respect to the vehicle body. Thus, the swivel support portion at the front end portion of the steering column 3 becomes complex, resulting in an increase in cost.

Fig. 11 illustrates a structure disclosed in JP 1-173072 U. As shown in Fig. 11, a lower support bracket 19 is formed by bending a metal plate into an L shape, and includes a drooped plate portion 20, an attaching plate portion 21, and a bent portion which continuously connects the drooped plate portion 20 and the attaching plate portion 21. The drooped plate portion 20 is fixedly welded to an end portion of a steering column 3, and the attaching plate portion 21 is fixed to a vehicle body. In this structure, an elastic deformation of the bent portion 22 allows the steering column 3 to swivel.

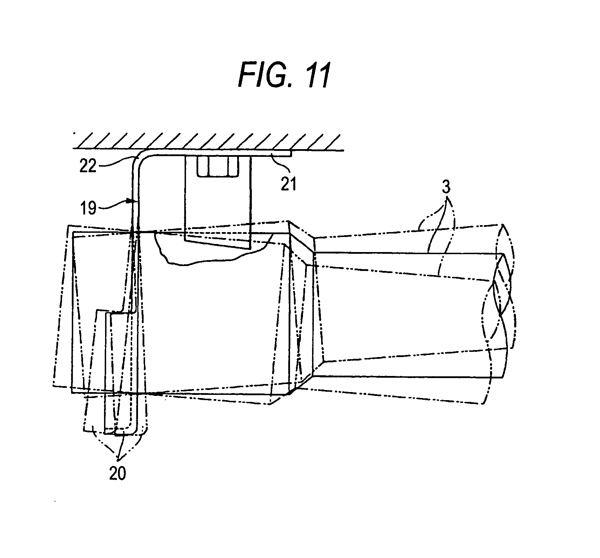

Although a cost reduction can be achieved in the structure disclosed in JP 1-173072 U, it is disadvantageous in terms of ensuring durability. Namely, the bent portion 22, which is a swiveling center of the steering column 3, is a portion formed by largely bending the metal plate in a perpendicular direction. Therefore, due to such a bending process, a large magnitude of distortion (residual tensional stress) exists inside the bent portion. In particular, in a case in which a thickness of the metal plate (i.e., the lower support bracket 19) is increased in order to ensure sufficient supporting rigidity, the distortion increases. Thus, in the event that the heightwise position of the steering wheel is repetitively adjusted, possibility cannot be denied that damage such as cracking is generated in the bent plate portion 22. Generally, this may not be a big problem because it is usually not often to adjust the heightwise position of the steering wheel. However, commercial vehicles, such as rental cars, company cars and taxies, are driven by different drivers day after day and, therefore, the heightwise position of the steering wheel is frequently adjusted. In such cases, it is considered difficult to improve rigidity by increasing the thickness of the plate and also to enhance durability at the same time in the structure shown in Fig. 11, unless expensive metallic material is used.

### SUMMARY

It is an object of the present invention to provide a tilt-type steering apparatus having a durable structure with low cost.

According to an aspect of the invention, a tilt-type steering apparatus includes a steering column, a swivel support bracket which swivelably supports the steering column, and a fixing bracket which supports an intermediate portion of the steering column such that a heightwise position of the intermediate portion of the steering column with respect to the fixing bracket is adjustable. The swivel support bracket includes a coupling plate portion in which an opening is formed at a central portion thereof, a support plate portion extending in a forward direction, and a bent portion which continuously connects an upper end edge of the coupling plate portion and the support plate portion. The coupling plate portion includes a low-rigidity portion at an intermediate portion in a vertical direction thereof. Bending rigidity of the low-rigidity portion is lower than that of the other portion of the coupling plate portion with respect to a force attempting to relatively displace an upper portion and a lower portion of the coupling plate portion in a front-and-rear direction.

Other aspects and advantages of the invention will be apparent from the following description, the drawings and the claims.

### BRIEF DESCRIPTION OF THE DRAWINGS

Fig. 1 is a side view of a tilt-type steering apparatus according to an exemplary embodiment of the invention.
Fig. 2 is a front view of the tilt-type steering apparatus which is seen from the left side in Fig. 1.
Fig. 3A is a front view of a swivel support bracket having a low-rigidity portion according to a first example, and Fig. 3B is a side view thereof.
Fig. 4A is a front view of a swivel support bracket having a low-rigidity portion according to a second example, and Fig. 4B is a side view thereof.
Fig. 5A is a front view of a swivel support bracket having a low-rigidity portion according to a third example, and Fig. 5B is a side view thereof.
Fig. 6A is a front view of a swivel support bracket having a low-rigidity portion according to a fourth example, and Fig. 6B is a side view thereof.
Fig. 7 is a schematic side view of a conventional structure.
Fig. 8 is an enlarged sectional view taken along the line A-A in Fig. 7.
Fig. 9 is a side view showing an example of a structure conceived by the inventor.
Fig. 10 is a front view which is seen from the left side in Fig. 9.
Fig. 11 is a side view of another conventional structure.

### DETAILED DESCRIPTION

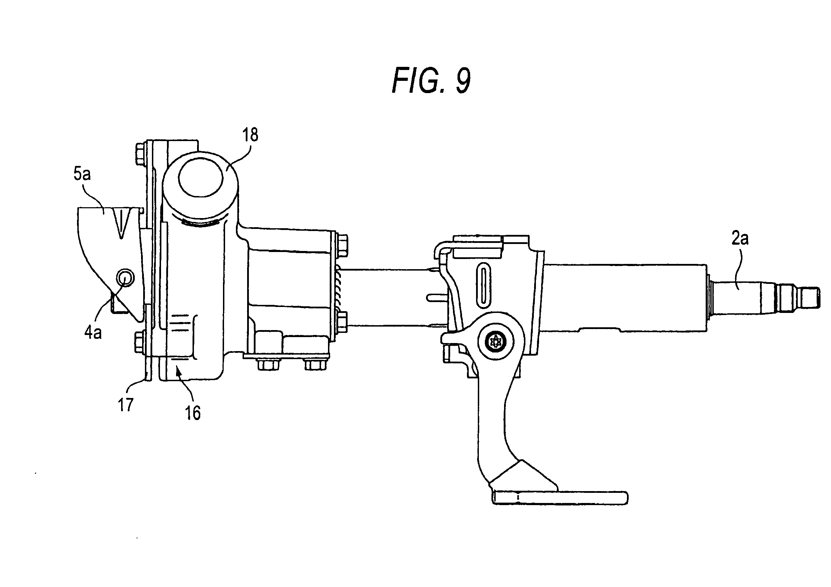

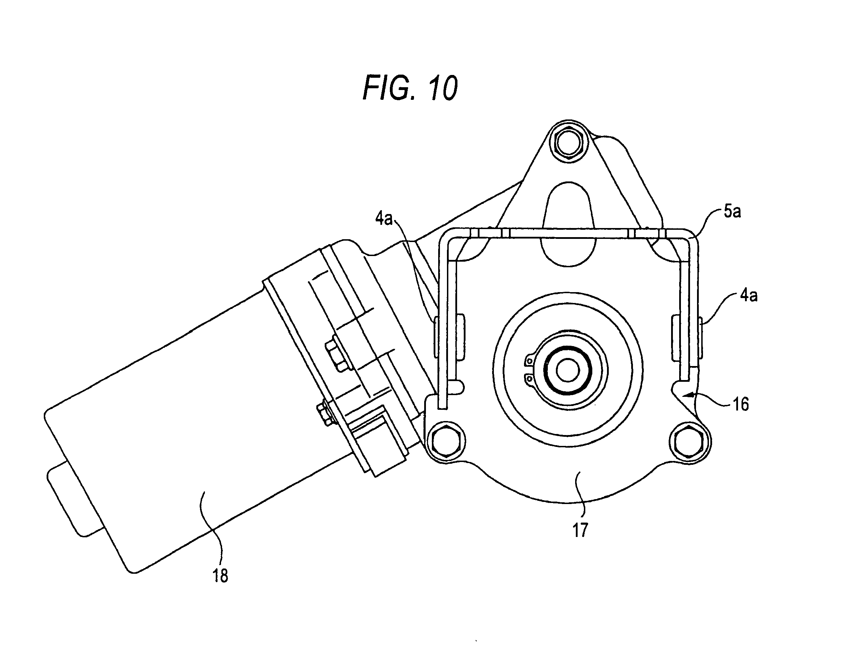

Figs. 9 and 10 show a structure of a tilt-type steering apparatus conceived by the inventor. This tilt-type steering apparatus includes an electric power steering device. As shown in Figs. 9 and 10, three positions on a swivel support plate 17 are bolted to three positions on a front surface of a housing 16 of the electric power steering device. The swivel support plate 17 and a lower fixing bracket 5, which is fixed to a vehicle body, are coupled together via a pair of lateral shafts 4a such that the swivel support plate 17 is swivelable with respect to the lower fixing bracket 5. According to this structure, not only a large number of components are involved and hence the production cost is increased, but also the following drawback is caused as a problem intrinsic to the tilt-type steering apparatus having the electric power steering device.

The electric power steering device applies an auxiliary rotational force (an assist force) to a steering shaft 2a from an electric motor 18 via a worm-type reduction gear, thereby reducing a force required to operate a steering wheel (a steering force). When applying the assist force, a force in a clockwise or counterclockwise direction in Fig. 10 (a direction opposite to a rotational direction of the steering shaft 2) is applied to the housing 16, which supports the electric motor 18, as a reaction of the power transmission in the reduction gear portion. As a result, looseness is generated in a coupling portion between the swivel support plate 17 and the lower fixing bracket 5 (the amount of looseness corresponds to a minute gap existing in the coupling portion), and this looseness may bring discomfort to a driver.

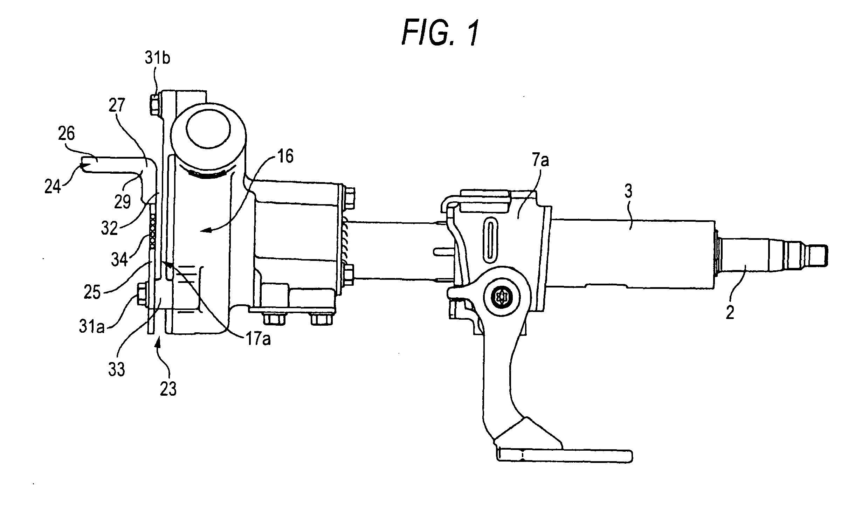

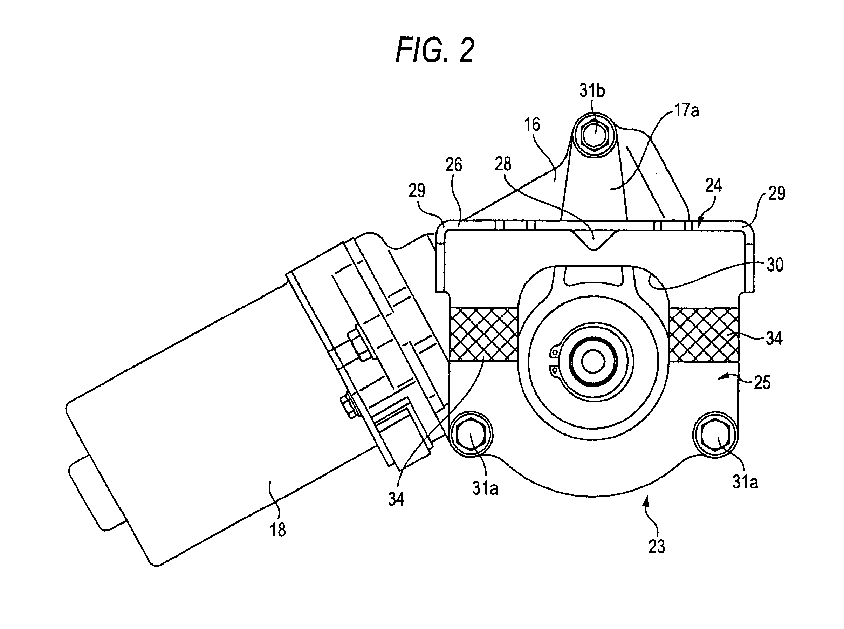

Figs. 1 to 6 show exemplary embodiments of the invention. The following exemplary embodiments do not limit the scope of the invention. As shown in Figs. 1 and 2 illustrating one exemplary embodiment of the invention, a power steering device is fixed to a front end portion of a steering column 3. A swivel support device 23 supports a housing 16 of the power steering device such that the housing 16 is swivelable with respect to a vehicle body. An upper fixing bracket 7a is fixedly supported by the vehicle body. An intermediate portion of the steering column 3 is supported by the upper fixing bracket 7a such that a position of the steering column 3 is adjustable in a heightwise direction with respect to the upper fixing bracket 7a.

The swivel support device 23 includes a swivel support bracket 24 which supports the housing 16 with respect to the vehicle body. The swivel support bracket 24 is formed by bending a metal plate having a required rigidity, e.g., a carbon steel plate, or a stainless steel plate. The swivel support bracket 24 includes a coupling plate portion 25, which extends in a vertical direction, and a support plate portion 26, which is bent in a forward direction substantially at right angle from an upper end edge of the coupling plate portion 25, and a bent portion 27 which continuously connects the coupling plate portion 25 and the support plate portion 26. The support plate portion 26 is fixed to the vehicle body with bolts when assembled into the vehicle. In order to increase bending rigidity of the bent portion 27, a reinforcement bead 28 is formed at a central portion of the bent portion 27, and bent edges 29 are formed on both right and left end edge portions of the bent portion 27. Thus, a bending angle of the bent portion 27 does not change even when the steering column 3 is displaced in its tilting direction.

An opening 30 is formed in a central portion of the coupling plate portion 25. A member (e.g., an output shaft of the power steering device) for transmitting a rotational force of a steering shaft 2, which is rotationally supported within the steering column 3, is inserted through the opening 30. Both right and left lower end portions of the coupling plate portion 25 are fixedly connected to a front surface of the housing 16. According to the exemplary embodiment, three positions on a swivel support plate 17a are fixed to three positions on the front surface of the housing 16 with bolts 31a, 31b. The two lower bolts 31 a fix the right and left lower end portions of the coupling plate portion 25 and right and left lower end portions of the swivel support plate 17.

A gap 32 is provided between a portion of a rear side surface of the coupling plate portion 25 (i.e., a portion from an intermediate portion to an upper end portion thereof) and a front side surface of the swivel support plate 17a. In order to provide this gap 32, raised portions 33, which project in the forward direction, are provided at the right and left lower end portions on the front surface of the swivel support plate 17. The coupling plate portion 25 and the swivel support plate 17 are fixedly connected to the housing 16 with the two bolts 31 a in a state in which the right and left lower end portions on the rear side surface of the coupling plate portion 25 are brought into abutment with apex portions of the raised portions 33.

The coupling plate portion 25 includes low-rigidity portions 34 at its intermediate portion in a vertical direction (shaded portions in Figs. 1 and 2). More specifically, the low-rigidity portions 34 are provided between right and left side edges of the connecting plate portion 25 and the opening 30. These low-rigidity portions 34 are both provided along a horizontal direction on the same level, and their bending rigidity against a force attempting to relatively displace upper and lower portions of the coupling plate portion 25 (portions facing across the low-rigidity portions 34) in a front-and-rear direction is lower than that of the other portions (portions other than the shaded portions).

When adjusting the heightwise position of the steering wheel 1 (see Fig. 7) in the tilt-type steering apparatus according to the exemplary embodiment described above, an elastic deformation of the low-rigidity portions 34 of the swivel support bracket 24 allows the steering column 3 to be swiveled. Because the swiveling angle required for the aforesaid height adjustment is small, the steering column 3 can be swiveled sufficiently within a range where the rear side surface of the coupling plate portion 25 does not interfere with the front side surface of the swivel support plate 17a (without eliminating the gap 32).

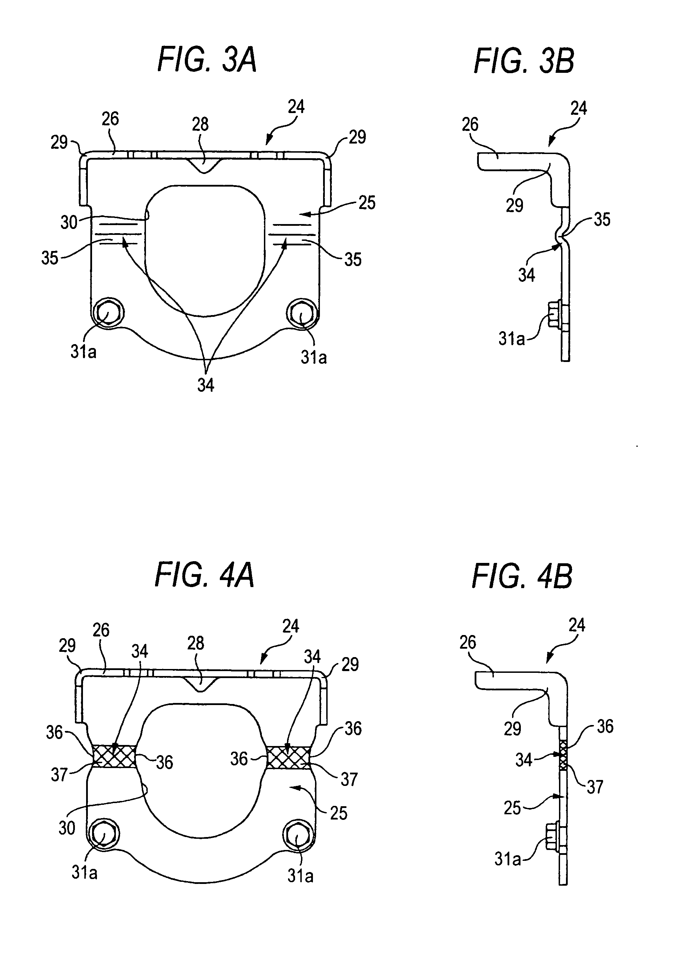

Figs. 3 to 6 show various examples of the low-rigidity portions 34.

Fig. 3 shows a first example of the low-rigidity portions 34. As shown in Fig. 3 the low-rigidity portions 34 includes ridge portions 35 which are formed by bending portions between the right and left side edges of the coupling plate portion 25 and an inner circumferential edge of the opening 30 (the shaded portions in Figs. 1 and 2) in the front-and-rear direction.

Fig. 4 shows a second example of the low-rigidity portions 34. As shown in Fig. 4, the low-rigidity portions 34 includes arc-like recessed portions 36, 36 which are formed on the right and left side edges of the coupling plate portion 25 and on the inner circumferential edge of the opening 30 in such a manner as to approach each other. Then, constricted portions 37 (shaded portion in Fig. 4) between the respective recessed portions 36 and narrowed compared with the other portions.

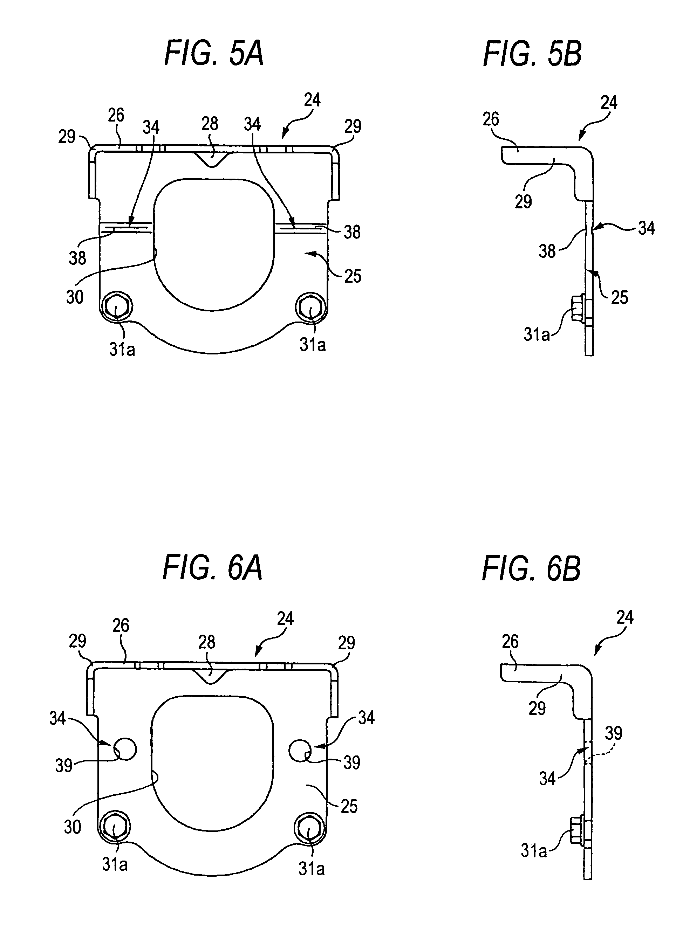

Fig. 5 shows a third example of the low-rigidity portions 34. As shown in Fig. 5, the low-rigidity portions 34 includes thin portions 38 formed by a surface pressing between the right and left side edges of the coupling plate portion 25 and the inner circumferential edge of the opening 30.

Fig. 6 shows a fourth example of the low-rigidity portions 34. As shown in Fig. 6, the low-rigidity portions 34 are formed with holes 39 between the right and left side edges of the coupling plate portion 25 and the inner circumferential edge of the opening 30, thereby substantially reducing the width of the relevant portions compared with the other portions.

According to the tilt-type steering apparatus of the exemplary embodiments described above, firstly, the low-rigidity portion 34 is a portion of the swivel support bracket 24, and the steering column 3 can be swiveled (i.e., the tilt angle of the steering column can be adjusted) by bowing the low-rigidity portion 34. Thus, the numbers of components involved and an amount of assembling work can be decreased, whereby the manufacturing cost can be saved.

Further, the low-rigidity portion 34 according to the exemplary embodiments are different from the bent portion 22 shown in Fig. 11 in that no bent portion is formed, or even if a bent portion is formed, the magnitude of bending is small. Therefore, the distortion that exists in the low-rigidity portion 34 is zero or minute. Accordingly, even in a case where the heightwise position of the steering wheel is adjusted repeated frequently, damage such as cracking is prevented from being generated. Thus, superior durability can be ensured with low cost.

When the electric power steering device is in operation, a reaction force associated with the assist force applied to the steering shaft 2 from the electric motor 18 is applied in a clockwise direction or a counterclockwise direction in Fig. 2. However, because the directions of the reaction force is different from the direction along which rigidity is decreased in the low-rigidity portions 34, neither vibration nor noise is generated by the reaction force in the portion of the swivel support device 23. In addition, unlike the structure in which the lower fixing bracket and the swivel bracket are connected together by the lateral shaft, no gap exists in the swivel support portion. Thus, looseness is not generated irrespective of the assist force.

While description has been made in connection with exemplary embodiments of the present invention, it will be obvious to those skilled in the art that various changes and modification may be made therein without departing from the present invention. It is aimed, therefore, to cover in the appended claims all such changes and modifications falling within the true spirit and scope of the present invention.

## Claims

1. A tilt-type steering apparatus comprising:
a steering column;
a swivel support bracket which swivelably supports the steering column; and
a fixing bracket which supports an intermediate portion of the steering column such that a heightwise position of the intermediate portion of the steering column with respect to the fixing bracket is adjustable,
wherein the swivel support bracket comprises:
a coupling plate portion formed with an opening at a central portion thereof;
a support plate portion extending orthogonal to the coupling plate portion; and
a bent portion which continuously connects an upper end edge of the coupling plate portion and the support plate portion,
wherein a lower portion of the coupling plate portion is coupled to the steering column,
wherein the coupling plate portion includes a low-rigidity portion at an intermediate portion between the lower portion and the upper end edge thereof, and
wherein bending rigidity of the low-rigidity portion is lower than that of the other portion of the coupling plate portion with respect to a force attempting to relatively displace an upper portion and the lower portion of the coupling plate portion in a front-and-rear direction.

2. The tilt-type steering apparatus according to claim 1, wherein the low-rigidity portion includes ridge portions, both extending in a right-and-left direction in the same level, wherein the ridge portions are formed by bending portions between right and left side edges of the coupling plate portion and an inner circumferential edge of the opening in the front-and-rear direction.

3. The tilt-type steering apparatus according to claim 1, wherein the low-rigidity portion includes constricted portions disposed between recessed portions formed on right and left side edges of the coupling plate portion and recessed portions formed on an inner circumferential edge of the opening so as to approach towards the recessed portions of the right and left side edges, wherein the constricted portions are narrower than other portions in a right-and-left direction.

4. The tilt-type steering apparatus according to claim 1, wherein the low-rigidity portion includes thin portions formed between right and left side edges of the coupling plate portion and an inner circumferential edge of the opening.

5. The tilt-type steering apparatus according to claim 1, wherein the low-rigidity portion is disposed between right and left side edges of the coupling plate portion and an inner circumferential edge of the opening, and is formed with holes which reduce a width of the low-rigidity portion to be substantially narrower than other portions.

6. The tilt-type steering apparatus according to claim 1, further comprising:
an electric power steering device including a housing which is attached to a front end portion of the steering column; and
a raised portion disposed at a lower portion of a front surface of the housing so as to project forward therefrom, and
wherein the lower portion of the coupling plate portion is connected to the housing via the raised portion such that a gap is provided between the front surface of the housing and a rear surface of the coupling plate portion.

7. The tilt-type steering apparatus according to claim 6, further comprising a swivel support plate interposed between the front surface of the housing and the rear surface of the coupling plate portion,
wherein the swivel support plate and the raised portion are formed in a one-piece structure, and
wherein an upper portion of the swivel support plate is fixed to the housing.

8. The tilt-type steering apparatus according to claim 6, wherein the electric power steering device further includes an output shaft inserted through the opening of the coupling plate portion.

9. The tilt-type steering apparatus according to claim 1, wherein the fixing bracket includes a pair of vertical plate portions, each of the vertical plate portions being formed with a slot extending in the vertical direction,
wherein the tilt-type steering apparatus further comprises:
a lift bracket fixed to a lower surface of the intermediate portion of the steering column between the pair of vertical plate portions, wherein through holes are formed so as to penetrate through the lift bracket in a right-and-left direction;
a rod member inserted through the slots and the through holes;
a pressing portion disposed at one end of the rod-shaped member;
a pressing member engaged with the other end of the rod-shaped member; and
a tilt lever having a base end portion fixed to the pressing member,
wherein the tilt lever is operable to widen or narrow a space between the pressing member and the pressing portion.

10. The tilt-type steering apparatus according to claim 1, further comprising a steering shaft inserted through the steering column such that the steering shaft is rotatable with respect to the steering column.

11. The tilt-type steering apparatus according to claim 10, further comprising;
a steering wheel fixed to a rear end portion of the steering shaft; and
a transmitting member which transmits a rotational force of the steering shaft,
wherein the steering shaft rotates in accordance with a rotation of the steering wheel, and
wherein the transmitting member is inserted through the opening of the coupling plate portion.

12. The tilt-type steering apparatus according to claim 1, wherein the swivel support bracket is formed from a metal plate.

13. The tilt-type steering apparatus according to claim 1, wherein right-and left edges of the bent portion are bent.

14. The tilt-type steering apparatus according to claim 1, wherein a reinforcement bead is formed at a central portion of the bent portion.

15. A vehicle comprising:
a vehicle body; and
the tilt-type steering apparatus according to claim 1,
wherein the fixing bracket and the support plate portion are fixed to the vehicle body.
